# EUROPEAN PATENT SPECIFICATION

(11) **EP 3 720 647 B1**
(45) Date of publication and mention of the grant of the patent: **11.09.2024**
(21) Application number: 18836944.1
(22) Date of filing: 06.12.2018
(51) Int. Cl.: B23K 35/26, H01K 1/20, B23K 35/30, B22F 1/00, H01L 23/00, B23K 1/20, B23K 35/02, B22F 7/06, B23K 1/00, C22C 1/04, B22F 1/10

(54) **METALLURGICAL COMPOSITIONS WITH THERMALLY STABLE MICROSTRUCTURES FOR ASSEMBLY IN ELECTRONIC PACKAGING**
METALLURGISCHE ZUSAMMENSETZUNGEN MIT THERMISCH STABILEN MIKROSTRUKTUREN ZUR MONTAGE IN DER ELEKTRONISCHEN VERPACKUNG
COMPOSITIONS MÉTALLURGIQUES À MICROSTRUCTURES THERMIQUEMENT STABLES POUR ASSEMBLAGE DANS UN EMBALLAGE ÉLECTRONIQUE

(30) Priority: 07.12.2017 US 201762596038 P
(43) Date of publication of application: 14.10.2020
(73) Proprietor: Ormet Circuits, Inc., San Diego, CA 92121 (US)
(72) Inventor: SHEARER, Catherine, A., Branchburg New Jersey 08876 (US)
(74) Representative: Rippel, Hans Christoph
(86) International application number: PCT/US2018/064070
(87) International publication number: WO 2019/113208

(56) References cited:
- WO-A1-2014/082100
- WO-A1-2016/174584
- WO-A2-2011/078918
- US-A- 5 853 622
- US-A1- 2010 252 616
- US-A1- 2017 025 223
- US-B2- 9 005 330
- US-B2- 9 583 453

## Description

### FIELD OF THE INVENTION

The present invention relates to metal compositions, methods of preparation thereof and uses thereof. More specifically, the present invention relates to metallic transient liquid phase sintering compositions containing blended formulations of metals and/or metal alloys that are useful for providing electrical and/or thermal connections between elements in electronic packaging forming interconnected conductive metallurgical networks with good strength and stable microstructures through multiple thermal excursions.

### BACKGROUND OF THE INVENTION

The electronics industry has been driven towards higher performance and functionality in smaller form factors. At the production level, these driving forces have translated into smaller circuit features, designs and manufacturing methods that support more efficient circuit routing, elimination of layers of packaging, and sophisticated engineered materials. Issues that have been exacerbated by these trends include thermal management and management of the thermo-mechanical stresses generated by close juxtaposition of dissimilar materials. The present disclosure relates specifically to challenges in the assembly of elements within electronic packaging structures that will be subjected to multiple thermal exposures as a consequence of multiple assembly steps or a high operating temperature environment.

### High Temperature Soldering

There is a growing market for high temperature solder materials in the electronics industry. There are two main drivers for the growth of this market segment: complex electronic assemblies that require multiple assembly steps, and integration of electronics into harsh operating environments, for example, in excess of 200°C operating temperature such as would be experienced in an automotive underhood application.

Currently these markets are being served by lead-bearing solders and expensive alloys such as gold-germanium. Lead has been banned from the majority of electronics applications in many areas of the world, but so far has been exempted in the high temperature solder applications due to the lack of an adequate replacement.

High-lead-bearing solders, in addition to their tenuous regulatory status, also suffer from some technical limitations. Although the melting temperature differential between the popular lead-free SAC (Sn/Au/Cu) alloys and lead-based solders exceeds the 30°C desired by the industry, mixed assembly with alloys such as tin-bismuth can result in the unintentional formation of very low melting temperature alloys that compromise the reliability of the device they are used to construct. The shear strength of the high-lead alloys is typically half that of the high-tin alloys that would be used in secondary reflow. In applications in which the high-lead solder is used to attach very small components (*e.g.*, attaching chip resistors to a package), the strength may be too low to prevent component loss during handling. Lastly, in high operating temperature applications, the melting point of these alloys may be insufficient to withstand the rigors of the operating environment.

Multi-step or step soldering, in which consecutive joints are soldered at sequentially lower temperatures, can be used to maintain the integrity of preceding joints. Such operations are commonly used in products for the consumer electronics market. However, the push to eliminate lead from this market segment is particularly strong.

There are lead-free solutions to the step-soldering dilemma, but they are not ideal. Tin-antimony solder can be used in conjunction with the popular SAC alloys, but the desirable melting temperature differential between them is less than the 30°C desired for step soldering that would be available with lead solder/SAC systems. In addition, antimony is coming under increasingly harsh scrutiny due to environmental toxicity issues. Alternatively, SAC alloy may be used as the initial assembly material, followed by a tin-bismuth or tin-indium alloy for the second assembly reflow step. However, such a system would not be suitable for high temperature applications because it would result in an effective maximum operating temperature of only ~100°C. Further, the secondary reflow step is typically the one in which the majority of the components are assembled to the printed circuit board (PCB) and tin-bismuth and tin-indium are neither common nor popular choices for this assembly step.

### General problems with solder interconnects for complex electronic packaging assembly

Solder is a very versatile interconnect material, but it does suffer from a number of limitations. In addition to remelt issues, the wetting and surface tension characteristics of solder, which are often advantageous, can become disadvantages. With regard to wetting, during reflow, solder becomes a molten metal that will spread and wet to any solderable surface in the proximity of the solder deposit. This wetting behavior has two consequences that are problematic for complex interconnect schemes. The first is that the solder deposit formed by the stencil or dispense operation is not the shape that will be present after reflow. This poses limitations for stand-off and pitch capabilities. The second consequence is that any solderable surface where solder wetting is not desired must be masked. The masking process can be complex and the mask material, along with the flux residues from the solder paste, can cause complications in overmolding. The high surface tension of molten solder, when combined with the trend toward ever-smaller passive devices, has also resulted in the re-emergence of 'tombstoning' joint defects during solder reflow. Finally, the essentially unlimited volume of tin in the bulk of the solder interconnect relative to the volume of the metal in the surfaces joined creates the potential for changes in the interconnect microstructure through multiple thermal excursions.

### Transient Liquid Phase Sintering (TLPS)

Sintering is a process in which adjacent surfaces of metal powder particles are bonded by heating. Liquid phase sintering is a special form of sintering during which solid powder particles coexist with a liquid phase. Densification and homogenization of the mixture occur as the metals diffuse into one another and form new alloy and/or intermetallic species.

In transient liquid phase sintering (TLPS) of powders, the liquid phase only exists for a short period of time as a result of the homogenization of the metals to form a mixture of solid alloy and/or intermetallic species. The liquid phase has a very high solubility in the surrounding solid phase, thus diffusing rapidly into the solid, and eventually solidifying. Diffusional homogenization creates the final composition without the need to heat the mixture above its equilibrium melting point.

In TLPS compositions comprising powder metallurgy, a relatively low melting point (LMP) alloy and a relatively high melting point (HMP) metal are mixed in particulate form. At least one element within the alloy is either highly soluble in, or is reactive with, the receptive HMP metal. As the temperature is raised to the melting point of the LMP alloy, the alloy particles become molten. This transition can be observed as an endothermic event in differential scanning calorimetry (DSC). The reactive element(s) within the relatively low melting alloy then react with the receptive high melting point metal to form new alloy compositions and/or intermetallics. The formation of intermetallic species may be observed as an exothermic event using DSC. Thus, the typical TLPS DSC "signature" is an endotherm followed by an exotherm. The diffusion and reaction of the reactive element(s) from the low melting alloy and the receptive high melting metal continues until one of the reactants is fully depleted, there is no longer a molten phase at the process temperature, or the reaction is quenched by cooling. After cooling, subsequent temperature excursions, even beyond the original LMP alloy melt temperature, do not reproduce the original melt signature of the mixture. This is the "signature" of a typical low temperature transient liquid phase sintered metal mixture.

The microstructure of processed TLPS compositions appears as a network of particles of HMP metal, each bearing one or more "shells" of the newly formed alloy/intermetallic compositions, which are in turn interconnected by the non-reactive portion of the original LMP alloy. Open areas of the metallic network structure are sometimes filled with the residual organic composition. Reaction between the HMP metal and the reactive element(s) of the LMP alloy may result in either partial or complete incorporation of the HMP metal particles into the newly formed alloy and/or intermetallic species. The number and nature of the new alloy and/or intermetallic species that form is dependent on the selection of metallic constituents in the TLPS composition, their relative proportions, the particle size distribution and the process temperature. The composition of the residual components of the original LMP alloy is likewise dependent on these factors.

TLPS compositions are suitable replacements for conventional electrically and/or thermally conductive materials in a diverse assortment of applications, including assembly of electronic components, deposition of in-plane circuit traces, interconnection of circuit traces on different planes, assembly of unpackaged integrated circuit die onto packaging elements, and the like. For each of these applications, there is a specific set of application-specific attributes for which TLPS compositions confer an advantage over conventional materials. Attributes include, but are not limited to, ease of deposition, reduction in manufacturing time or complexity, increased circuit density in the resultant article, and production of environmentally stable interfaces that have high electrical and/or thermal conductivity.

Known TLPS compositions are described in US Patent Application Serial No. 15/109,115, filed January 16, 2014, and PCT Patent Application Serial No. PCT/US2013/074497, filed December 11, 2013, each of which is incorporated by reference herein in its entirety. US2010/252616 discloses a particle mixture composition including both alloys (solid solutions) and intermetallics (crystalline structures with specific proportions of elements) and a method for making an electrically and thermally conductive interconnection.

There are; however, limitations to the use of TLPS pastes to replace solder in electronic packaging assembly applications. The ability of solder to fully liquefy enables it to extend to wet misplaced components and to fully densify during reflow, but it also causes low strength at high temperature in subsequent thermal processes and the high volume of unreacted solder alloy results in joints with poor microstructure stability with additional thermal work. Traditional TLPS pastes may ameliorate the remelt and microstructure instability of solder pastes, but typically lack the favorable wetting and densification characteristics.

Accordingly, there is a continued need for new electrically and/or thermally conductive materials. In particular, it would be advantageous to provide electrically and/or thermally conductive materials that provide an inexpensive, robust, low process temperature, and reliable electrical and thermal interconnection strategy at various critical junctions within electronic device processing schemes. Further, it would be advantageous to provide interconnects with the ease of processability, wetting and densification of solder pastes with the thermal stability of TLPS pastes in subsequent thermal excursions for electronic packaging requiring multiple assembly steps. The present disclosure addresses these needs.

### SUMMARY OF THE INVENTION

In one of its aspects, the present invention relates to a paste composition comprising:
a) 40-70 percent by weight (wt%) of a low melting point (LMP) particle composition, wherein the particles are selected from the group consisting of particles of at least one LMP metal (**Y**), at least one alloy of the at least one LMP metal (**X/Y**), and combinations thereof;
b) 25-65 wt% of a high melting point (HMP) particle composition, comprising at least one metallic element (**M**) that is reactive with the at least one LMP metal **Y** of the (LMP) particle composition at a process temperature T1; and
c) 1-15 wt% of a fluxing vehicle
   wherein the reaction products formed between **M** and **Y** are crystalline intermetallics that are solids at temperature T1; and
   wherein the surface area of said HMP particle composition is in the range of 0.07 to 0.18 square meters per gram of Y in said composition.

Adding a higher proportion of LMP metals (Y) or alloys (X/Y) to TLPS pastes, results in more solder-like behavior with better wetting, densification during reflow and ductility. However, as additional weight percentages of Y alloy are added to the TLPS pastes the beneficial properties are attained at the expense of the TLPS paste characteristics.

The reaction between the LMP metal (Y) and HMP metals (M) is essentially a surface reaction between the reactive metal and the LMP metal to form intermetallic crystal shells. The degree of thermal work and the proportions of the metals determines the final state of interdiffusion, but in typical solder replacement applications, the shells formed are on the order of a few microns.

By manipulating the ratio of the surface area of the reactive metal (M) to the weight percentage of (Y), high weight percentages of (X/Y) alloy(s) may be incorporated into the TLPS formulation to the benefit of both sets of competing characteristics. A range in which this optimum balance of characteristics is manifested has been discovered by the inventors and forms the basis of the present disclosure. Specifically, it has been determined that controlling the ratio of the surface area of the reactive metal (M) to the weight percentage of (Y) within the range of 0.07 to 0.18 provides an advantageous combination of low electrical resistivity, good shear strength at room temperature, shear strength at eleveate temperatue (*e.g*., 260°C), and/or low remelting behavior. Below this range, the high temperature shear strength becomes unacceptably low and the remelting behavior is excessive. Above this range, the low proportion of remelt suggests that all of the (Y) has been converted to intermetallics which makes the resulting material prone to fracture when the assembly is bent or twisted.

In particular embodiments, remelt on DSC is at least about 1.7 J/g, at least about 5 J/g, at least about 10 J/g, or at least about 15 J/g. In other embodiments, remelt on DSC is not more than about 30 J/g, not more than about 25 J/g, or not more than about 20 J/g.

In particular embodiments, electrical resistivity is at least about 17 microohm*cm, at least about 20 micro-ohm*cm, at least about 21 micro-ohm*cm, or at least about 22 micro-ohm*cm. In other embodiments, electrical resistivity is not more than about 25 microohm*cm, or not more than about 24 micro-ohm*cm.

In particular embodiments, shear (0805) on copper at room temperature is at least about 3 kg/mm², at least about 4 kg/mm², or at least about 5 kg/mm². In other embodiments, shear (0805) on copper at room temperature is not more than about 10 kg/mm², not more than about 9 kg/mm², or not more than about 8 kg/mm².

In particular embodiments, shear (0805) on copper at elevated temperature (*e.g*., 260°C) is at least about 0.2 kg/mm², at least about 0.3 kg/mm², at least about 0.5 kg/mm², or at least about 1 kg/mm². In other embodiments, shear (0805) on copper at elevated temperature (e.g., 260°C) is not more than about 10 kg/mm², not more than about 5 kg/mm², or not more than about 4 kg/mm².

**M** can, for example, be selected from the group consisting of Cu, Ag, Pd, Au, Al, Ni, Be, Rh, Co, Fe, Mo, W, Mn, Pt and combinations thereof; or from the group consisting of Cu, Ag, Pd, Au, Al, Ni, Pt and combinations thereof; and in some embodiments, the at least one **M** is Cu. In some embodiments, the HMP particle composition includes at least two HMP metals (i.e., at least two different M species).

The surface area of M available for reaction with Y is manipulated through the particle size distribution of HMP metal M in the paste composition. Particles of HMP metal M may be introduced in spherical, near spherical, platelet, flake and amorphous shapes. In order to achieve the available surface area of M as required by invention, multiple size distributions and shapes may be blended. The resulting combined surface area may be determined by gas absorption techniques or any other method known to skilled artisans.

**Y** can be, for example, selected from the group consisting of Sn, Zn, Ga, In, and combinations thereof; and in some embodiments **Y** is Sn, In or a combinations Sn and In. In some embodiments, the LMP particle composition includes at least two LMP metals **Y** or alloys **X/Y.**

The fluxing vehicle comprises organic acids and/or bases that serve to remove the oxides from the metal powders in order to facilitate wetting of the HMP (M) by Y to enable the reaction between Y and M. In addition to flux, the vehicle may comprise a variety of chemicals to achieve desired rheology, consistency, tackiness and the like. Examples of such additional chemicals include solvents, diluents, tackifiers, thixotropes, surfactants and the like as required by the specific characteristics of the immediate application.

In certain aspects of the invention **T1** is in the range of 190°C to 400°C, 200°C to 375°C or 220°C to 320°C.

### BRIEF DESCRIPTION OF THE DRAWINGS

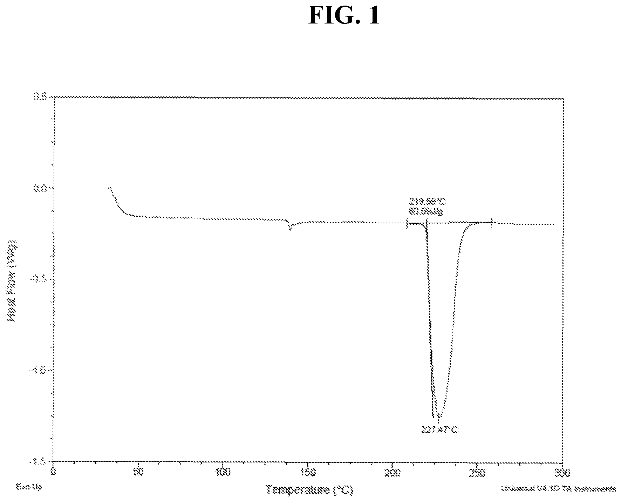

FIG. 1 provides a quantitative heat of fusion analysis of a typical solder alloy for comparative purposes.

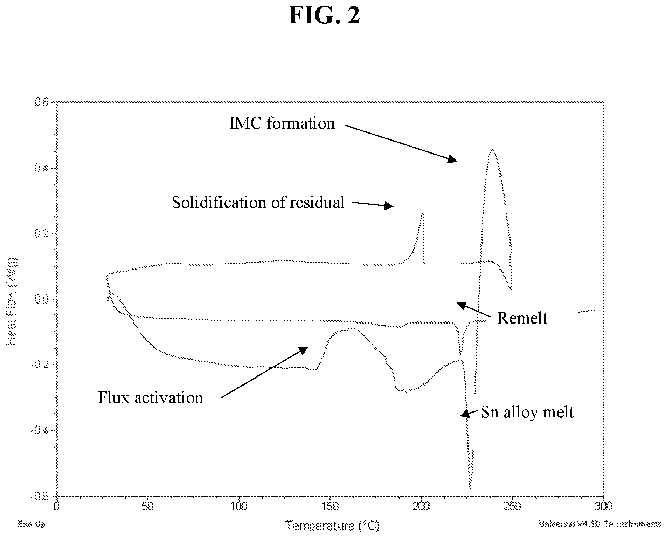

Fig. 2 shows a typical differential scanning calorimetry (DSC) scan of an unprocessed TLPS paste. Key events in the thermal processing; such as melting, reaction and solidification; are captured by downward and upward peaks in the scan. The prominent downward peak represents the melting of the LMP alloy of the composition and the upward peak following shortly thereafter represents the energetic formation of the intermetallic reaction products formed from (Y) and (M). Continuing through the loop, an upward exothermic peak is observed as the composition is cooled from the peak processing temperature back to room temperature and a corresponding downward peak is observed as the residual LMP alloy remelts in a subsequent heating cycle.

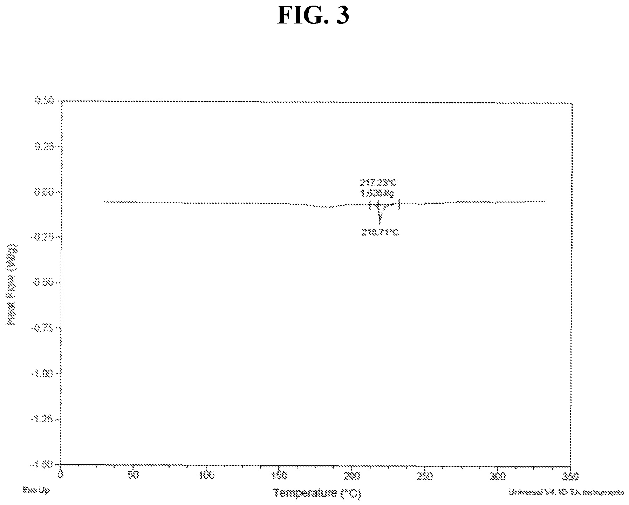

Fig. 3 provides a quantitative DSC analysis of the residual LMP present in a TLPS composition of the present disclosure after processing at T1.

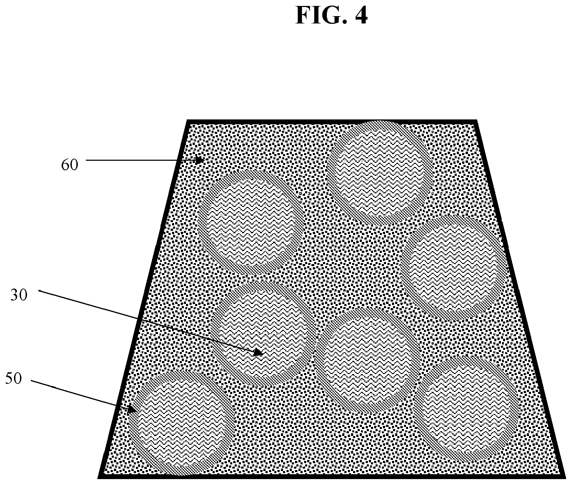

Fig. 4 is an illustration depicting a processed TLPS composition of the present disclosure in which a proportion of the HMP metal particles incorporated are relatively large and thus retain an unreacted core subsequent to thermal processing at temperature T1. These residual cores may be employed to advantageously manipulate the mechanical characteristics of the processed deposit.

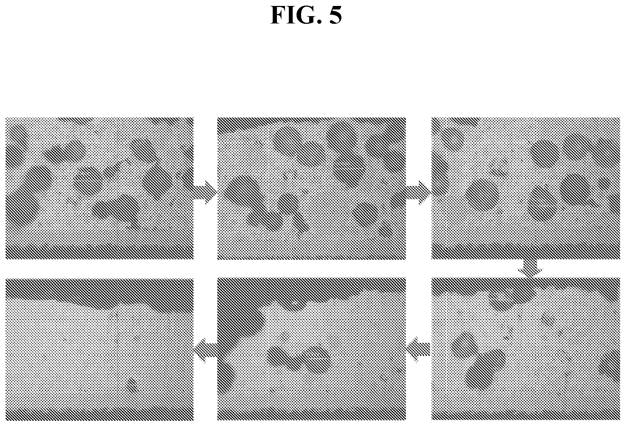

Fig. 5 is a series of optical photographs of cross-sections of processed TLPS pastes as the weight proportion of Cu (HMP) is gradually decreased relative to the weight percentage of Sn-based alloy. It is evident that, as the weight proportion of Sn-alloy increases, the deposit become substantially more solder-like in wetting and densification. Conversely, the conversion to a more solder-like character parallels a trend in loss of shear strength - particularly at elevated temperature - and reduced microstructure stability with thermal work subsequent to the initial processing.

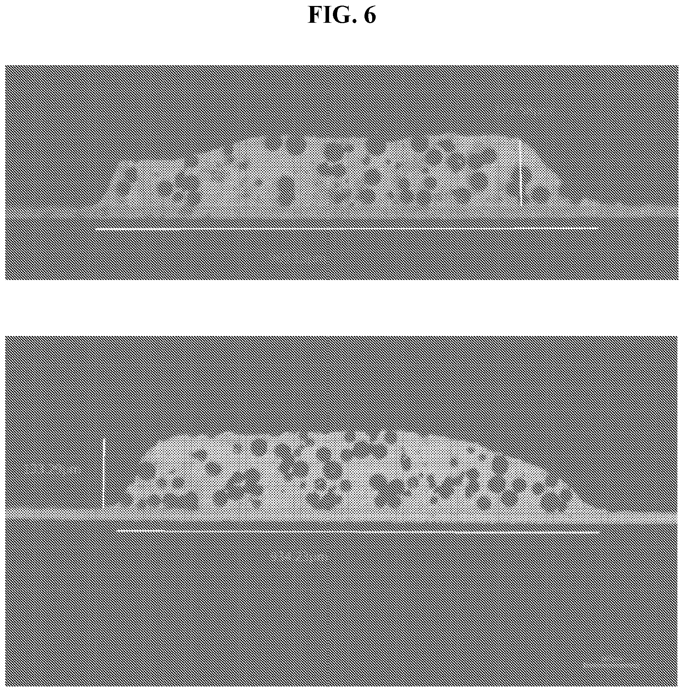

Fig. 6 are optical images of cross-sections of a TLPS composition of the present disclosure deposited on a metallic surface: (a) after initial processing under common solder reflow conditions, and (b) after 100 thermal cycles from -65°C to 150°C subsequent to initial processing. Examination of the cross sections indicates that there has been little change in the bulk and interfacial regions of the deposit as a result of the additional thermal work.

### DEFINITIONS

Unless otherwise stated, the following terms used in the specification and claims shall have the following meanings for the purpose of this Application.

In this application, the use of the singular includes the plural, and the words "a", "an" and "the" mean "at least one", unless specifically stated otherwise. Furthermore, the use of the term "including", as well as other forms such as "includes" and "included", is not limiting. Also, terms such as "element" or "component" encompass both elements or components comprising one unit and elements or components that comprise more than one unit, unless specifically stated otherwise. As used herein, the conjunction "and" is intended to be inclusive and the conjunction "or" is not intended to be exclusive, unless otherwise indicated. For example, the phrase "or, alternatively" is intended to be exclusive. As used herein, the term "and/or" refers to any combination of the foregoing elements including using a single element.

The term "about" or "approximately," when used in connection with a measureable numerical variable, refers to the indicated value of the variable and to all values of the variable that are within the experimental error of the indicated value (*e.g*., within the 95% confidence limit for the mean) or within ±10 percent of the indicated value, whichever is greater.

Whenever it appears herein, a numerical range, such as "45-55", refers to each integer in the given range; e.g., "45-55%" means that the percentage can be 45%, 46%, etc., up to and including 55%. Where a range described herein includes decimal values, such as "1.2% to 10.5%", the range refers to each decimal value of the smallest increment indicated in the given range; e.g. " 1.2% to 10.5%" means that the percentage can be 1.2%, 1.3%, 1.4%, 1.5%, etc. up to and including 10.5%; while " 1.20% to 10.50%" means that the percentage can be 1.20%, 1.21%, 1.22%, 1.23%, etc. up to and including 10.50%.

As used herein, the term "substantially" refers to a great extent or degree. For example, "substantially all" typically refers to at least about 90%, frequently at least about 95%, often at least 99%, and more often at least about 99.9%.

The term "alloy" refers to a mixture containing two or more metals, and optionally additional non-metals, where the elements of the alloy are fused together or dissolved into each other when molten. The notation used herein for alloy compositions lists two or more elements using their IUPAC symbols separated by a forward slash ("/"). When given, the proportions of the elements in the alloy are indicated by subscripts corresponding to the weight percent of the element in the alloy. For example, Sn/Bi represents an alloy of tin (Sn) and bismuth (Bi), which can be any proportion of these two elements. Sn(60)/Bi(40) represents a specific alloy of tin and bismuth that contains 60 percent by weight of tin and 40 percent by weight of bismuth. Where a range is given for the weight percent of an element(s) in an alloy, the range indicates that the element can be present in any amount within the indicated range. For example, Sn(70-90)/Bi(10-30) refers to an alloy containing from 70 weight percent to 90 weight percent of tin, and from 10 weight percent to 30 weight percent of bismuth. Thus, alloys encompassed by the "Sn(70-90)/Bi(10-30)" range include, but are not limited to: Sn(70)/Bi(30), Sn(71)/Bi(29), Sn(72)/Bi(28), Sn(73)/Bi(27), Sn(74)/Bi(26), Sn(75)/Bi(25), Sn(76)/Bi(24), Sn(77)/Bi(23), Sn(78)/Bi(22), Sn(79)/Bi(21), Sn(80)/Bi(20), Sn(81)/Bi(19), Sn(82)/Bi(18), Sn(83)/Bi(17), Sn(84)/Bi(16), Sn(85)/Bi(15), Sn(86)/Bi(14), Sn(87)/Bi(13), Sn(88)/Bi(12), Sn(s9)Bi(11), and Sn(90)/Bi(10).Furthermore, Sn(70-90)/Bi(10-30) represents alloys in which the specific proportion of the elements Sn and Bi may vary from Sn(70)/Bi(30) to Sn(90)/Bi(10) inclusive of proportions of Sn varying from 70 up to 90 weight percent and Bi inversely varying from 30 down to 10 weight percent.

The terms "melting temperature" or "melting point," as used herein, refer to the temperature (a point) at which a solid becomes a liquid at atmospheric pressure.

The term "differential scanning calorimetry" ("DSC") refers to a method of thermal analysis in which the difference in the amount of heat required to increase the temperature of a sample and reference are measured as a function of temperature. DSC is used to investigate the melting behavior of alloy particles and the reaction signature of TLPS pastes formulated with metals and alloys.

The term "sintering" refers to a process in which adjacent surfaces of metal powder particles are bonded by heating. "Liquid phase sintering" refers to a form of sintering in which the solid powder particles coexist with a liquid phase. Densification and homogenization of the mixture occur as the metals diffuse into one another and form new alloy and/or intermetallic species.

In "transient liquid phase sintering" or "TLPS", the liquid phase exists for only a short period of time as a result of the homogenization of the metals to form a mixture of solid alloy and/or intermetallic species. The liquid phase has a very high solubility in the surrounding solid phase, thus diffusing rapidly into the solid and eventually solidifying. Diffusional homogenization creates the final composition without the need to heat the mixture above the solidus temperature of the HMP metal.

The "Coefficient of Thermal Expansion" or "CTE" is a term of art describing a thermodynamic property of a substance. The CTE relates a change in temperature to the change in a material's linear dimensions.

The term "processing temperature" or "T1" as used herein in reference to TLPS compositions is a temperature at which two reactive metals (*e.g.* Cu and Sn) form intermetallic species. T1 can be, for example, between about 100°C and about 300°C, and typically is between about 120°C and about 260°C.

The terms "intermetallics" or "intermetallic species" refer to a solid material, which is comprised of two or more metal atoms in a certain proportion that has a definite structure which differs from those of its constituent metals.

### DETAILED DESCRIPTION

The present invention relates to electrically and thermally conductive compositions in which the surface area of HMP reactive metal (M) is specifically manipulated in proportion to the weight percentage of a LMP alloy component (Y). The purpose of this manipulation is to create, through a thermal processing step, interconnect structures between electronic packaging elements that retain strength at high temperature and have stable microsturctures through multiple thermal excursions. Further, the manipulation of this relationship within a specific preferred range affords such thermally stable interconnect structures with the favorable wetting and densification characteristics of the solder pastes commonly used in such applications.

In one of its aspects, the present invention relates to a paste composition comprising:
a) 40-70 percent by weight (wt%) of a low melting point (LMP) particle composition, wherein the particles are selected from the group consisting of particles of at least one LMP metal (**Y**), at least one alloy of the at least one LMP metal (**X/Y**), and combinations thereof;
b) 25-65 wt% of a high melting point (HMP) particle composition, comprising at least one metallic element (**M**) that is reactive with the at least one LMP metal **Y** of the (LMP) particle composition at a process temperature T1; and
c) 1-15 wt% of a fluxing vehicle,
   wherein the reaction products formed between **M** and **Y** are crystalline intermetallics that are solids at temperature T1; and
   wherein the surface area of said HMP particle composition is in the range of 0.07 to 0.18 square meters per gram of Y in said composition.

In certain embodiments, the paste composition comprises 42 - 65 percent by weight (wt%) of the low melting point (LMP) particle composition. In other embodiments, the paste composition comprises 45-60 percent by weight (wt%) of the low melting point (LMP) particle composition.

In certain embodiments, the paste composition comprises 35 - 60 percent by weight (wt%) of the high melting point (HMP) particle composition. In other embodiments, the paste composition comprises 40-55 percent by weight (wt%) of the high melting point (HMP) particle composition.

In certain embodiments, the paste composition comprises 2-10 wt% of the fluxing vehicle.

In the practice of certain embodiments of the invention, components a-c are mixed together to form a printable paste. Typically, the solder alloy powder will be present in an amount that is about 40-70 weight percentage (wt%) of the mixture; the metal powder will constitute from 25-65 wt% of the mixture; the fluxing vehicle will constitute up to 15 wt% of the mixture. The paste composition may further optionally include a metal powder additive in an amount of 0-30 wt% of the mixture.

In the instant invention, TLPS methodology is employed by admixing small particles of a reactive metal with the solder alloy particles in a fluxing vehicle. At least one element within the solder alloy powder is reactive with the metal in the small metal particles. As the temperature is raised to the melting point of the solder alloy, the particles become molten. This transition can be observed as an endothermic event in differential scanning calorimetry (DSC). The reactive element(s) within the solder alloy then react with the receptive, small metal particles to form new alloy compositions and intermetallics. The formation of intermetallic species may be observed as an exothermic event using DSC. The diffusion and reaction of the reactive element(s) from the low melting alloy and the receptive metal particles continues until the reactants are fully depleted, there is no longer a molten phase at the process temperature, or the reaction is quenched by cooling the mixture. After cooling, subsequent temperature excursions, even beyond the original melt temperatures, do not reproduce the original melt signature of the mixture. This is the signature of a typical low temperature transient liquid phase sintered (TLPS) metal mixture.

In one embodiment of the invention, TLPS compositions are provided that include at least one first particle comprising at least one high-melting-point (HMP) metal (**M**); and at least one second particle that includes a low-melting-point (LMP) metal **Y** and/or an alloy of the LMP metallic element (**X/Y**) that is reactive with **M**. The compositions can contain only a single type of HMP particle (*i.e.*, containing only one high melting point metal **M** or more than one type (*e.g*., containing two or more different high melting point metals, and/or one or more high melting point metals having particles of different sizes, shapes etc.). Similarly, the composition can contain a single type of LMP particle **Y** or multiple types, which can include various alloy compositions **X/Y,** additional elements, coatings, sizes, shapes and the like. Optionally, a portion of the HMP metal M may be incorporated in a substantially larger particle size distribution than the remainder to improve the mechanical characteristics of the processed invention composition.

The basis of the invention of the present disclosure is the discovery that the available surface area of HMP for a given weight of Y may be manipulated to advantage in order to incorporate a larger weight proportion of LMP in the composition for beneficial, solder-like attributes without substantially compromising thermal stability afforded by the TLPS reaction. The ability to leverage this relationship has practical limitations. For instance, incorporation of HMP metal powders substantially smaller than 1 µm could conceivably be used to provide very high surface area and thus enable compositions with very high weight proportions of LMP. However, the viscosity increase afforded by the incorporation of such very fine particles might render the resulting paste unusable from a practical standpoint. In addition, there is a point in which reduced particle size distributions offer diminishing returns in providing additional surface area as the interdiffusion rate of common TLPS combinations at common processing temperatures would result in full incorporation of the HMP metal particles into the intermetallic structures rather than being relegated to merely a surface reaction. Further, increasing the available HMP surface area per weight of composition may require a higher loading of flux chemistry to clean the surface area and make it available for reaction with Y. This increased flux proportion can deliver unintended consequences with respect to voiding and the like. Thus, the inventors have established ranges in which the surface area of HMP lever may be manipulated to advantage without significant detriment to other characteristics such as processability in the intended applications. The utility of the invention resides in a favorable balance of desirable characteristics.

The compositions of the present invention are based on the observation that TLPS compositions can be processed at a temperature, **T1**, to connect electronic components and the resulting processed connections will be stable upon subsequent heating to temperature **T1** and even higher temperatures. In other words, once metallurgically processed, TLPS compositions do not melt when heated beyond the process temperature. Thus, the TLPS compositions behave like "thermosets", rather than "thermoplastics".

The skilled artisan will recognize that "thermosets" irreversibly "cure" upon application of heat to become insoluble, hardened forms, while "thermoplastics" melt when heated, solidify when sufficiently cooled and can be remelted and resolidified repeatedly. Although this terminology is typically used to describe polymer adhesives, it is used herein to describe metallurgical compositions used to connect, for example, electronic components and other metallic elements.

Conventional metallic solder can be characterized as "thermoplastic". Solder is melted to join metal parts together and solidifies upon cooling to hold those parts in place; yet when subsequently re-heated, solder re-melts. In contrast, TLPS compositions behave like thermosets. When heated, TLPS compositions melt sufficiently to join metal parts together, and solidify upon cooling to hold those parts in place. However, during the melting process, TLPS compositions undergo irreversible metallurgical changes that can be considered "curing" with the result that the "cured" or processed TLPS composition will not melt upon re-heating.

In certain embodiments of the invention, conventional solder pastes containing low melting point (LMP) metal alloys, are combined with small reactive metal particles in proportions that convert the solder to a "thermosetting" form, which irreversibly "cures" during a typical solder reflow cycle. This "thermosetting" behavior results in a joint that does not remelt at the original reflow temperature and thus is suitable for secondary assembly cycles at the same reflow temperature as well as for high operating temperature applications.

In conventional solder reflow, the reflow temperature is typically selected to be 5-50°C in excess of the melting temperature of the solder paste to ensure that all the particles become molten and fluid. When invention compositions are used in place of solder paste for the attachment of electronic components, standard solder reflow practices may be followed.

In standard TLPS powder metallurgy, a relatively low melting point (LMP) metal alloy and a relatively high melting point (HMP) metal are mixed in particulate form. At least one element within the LMP alloy is reactive with the HMP metal. As the temperature is raised to the processing temperature, the LMP alloy particle types become molten. The reactive element(s) within the LMP alloy then react with the receptive HMP metal to form intermetallics, and the residual LMP alloy constituents form new alloy compositions. The diffusion and reaction of the reactive element from the LMP alloy and the receptive HMP metal continues until at least one of the reactants is either fully depleted, there is no longer a molten phase at the process temperature, or the reaction is quenched by cooling the mixture.

Phase diagrams for other common alloy systems can be viewed on the world wide web at metallurgy.nist.gov/phase/solder/solder.html.

In the practice of the invention, the at least one high-melting-point metal **M**, and at least one LMP metal **Y** and/or at least one alloy thereof **X/Y,** are selected so that the products of the transient liquid phase sintering reaction will have the optimum combination of attributes for the intended application. Key attributes that may be contemplated for the selection of **M** encompass characteristics such as thermally stable resistance, ductility, high electrical and thermal conductivity, coefficients of thermal expansion similar to the surrounding materials, and others that may be desirable under specific circumstances.

The invention compositions undergo a thermosetting reaction under solder reflow conditions to form a mixture of crystalline intermetallic and alloy products (*i.e.*, new alloys formed during TLPS reaction) that all have substantially higher melting temperatures than the initial solder alloy powder melt temperature, and vastly in excess of reflow processing temperatures. The alloy products formed during TLPS processing have a substantially different composition than the original solder alloy particles. This reaction is irreversible and the processed composition does not melt significantly during subsequent high temperature exposures. It is this feature that enables invention compositions to be used for standard reflow attachment of electronic components without remelting during subsequent reflow operations. Invention compositions, therefore, enable step soldering operations and high operating temperature electronic assemblies to be fabricated under standard industry solder reflow conditions without the use of lead, expensive elements such as gold, or exotic alloys.

The crystalline intermetallics that are formed during solder reflow using invention compositions comprise unit cells of fixed elemental proportions and structure in a multiplicity that defines a grain size. Crystalline intermetallics are strong, but brittle materials. When intermetallics are formed at the interface between a standard solder paste and a components attachment pad, large grains are typically grown with laminar interfaces with the pad and bulk solder. These laminar interfaces are susceptible to crack formation and propagation. With invention compositions; however, the small size of the reactive metal powder nucleates a large multiplicity of small disordered grains in different orientations. The growth of this multiplicity of grains is limited by the volume of reactive metal in each particle. The random orientation of each grain prevents the small grains from merging into a few large grains. This multiplicity of small, disordered grains promotes the formation of a strong joint that is not as susceptible to crack propagation as would a few large grains along a laminar interface.

Typically, the heat of fusion of the invention composition at the solder alloy melting temperature is reduced substantially during the initial solder reflow process. This property is illustrated in **FIGS. 1** through **3**. During initial processing, the TLPS composition exhibits a significant heat of fusion peak at the melting temperature of the SAC solder alloy component. After processing, the heat of fusion upon reheating to the melting temperature of the alloy is reduced substantially even when normalized for the proportion in the total composition. *See* **FIG. 2****.** The relative heat of fusion of a traditional Sn-based solder paste (SAC305 alloy) and the residual melting peak of a typical TLPS composition are quantified for contrast in FIGS. 1 and 3 respectively.

The energy required to change a gram of a substance from the solid to the liquid state without changing its temperature is called heat of fusion. The heat of fusion for any material is specific to that material. The expression of heat of fusion of the LMP metal **Y** within a TLPS composition will be dependent on the proportion of the LMP metal **Y** in the total composition. The depletion of the LMP metal **Y** phase in any given TLPS composition after processing, due to the reaction of **M** and **Y** to form intermetallic species, may be determined by comparing the heat of fusion of a sample of the unprocessed composition to that of one that has been processed at **T1**. Because the heat of fusion of the LMP metal **Y** in the unprocessed composition may be masked by the vigorous energy release associated with the TLPS reaction of **X** and **M**, it is often useful to use the heat of fusion of pure LMP metal **Y** (as in **FIG. 1**) and then normalize this value according to the weight percentage of LMP metal **Y** in the composition to obtain a value for the unprocessed TLPS composition.

As the weight proportion of LMP alloy is increased at the expense of the proportion of HMP metal over a given particle size distribution, it has been observed that the processed deposits become more solder-like in character with regards to wetting, densification and diminishing strength at elevated temperature (reference FIG. 5). In differential scanning calorimetry (DSC), the relationship is manifested by a residual alloy melt peak that increases commensurately with the increased proportion of alloy. Thus, the magnitude of the residual melt in a DSC analysis of any given TLPS composition is predictive of the retention of strength at high temperature of inventive compositions.

### High Melting Point Metal

HMP metals (**M**) include, but are not limited to, Cu, Ag, Pd, Au, Al, Ni, Be, Rh, Co, Fe, Mo, W, Mn and Pt. Typically, the HMP metal used in the compositions of the present invention is Cu, Ag, Pd, Au, Al, Ni or Pt, and most frequently the HMP metal is either Cu or Ag. The HMP particles comprising **M** may be substantially elemental **M,** may be **M** alloyed with other elements, may be **M** coated onto a non-metallic or other core particle, or may be **M** coated itself with another element, inorganic coating or organic coating. The use of multiple HMP metals is contemplated in order to obtain TLPS reaction products with optimal characteristics. For instance, in some applications the mechanical strength of the processed composition is less important than the electrical conductivity, or the thermal conductivity may be more important than the ductility. As it is often necessary to optimize one property at the expense of another, the individual constituents may be selected to give optimal performance in the intended application according to properties of the elements that are well-known in the art. Silver, gold, palladium, nickel and aluminum are specifically contemplated for use in the compositions and methods of the invention, either alone or in various combinations, including combinations with copper.

In some embodiments, it is beneficial for a portion of the HMP metal particles to be of a substantially larger size than the remainder of the HMP metal particles. The smaller particles of HMP metal serve as the primary source of surface area for reaction between M and Y, while the larger particles of HMP metal are too large to be effectively consumed in the formation of crystalline intermetallic structures composed of Y and M. Therefore, larger particle size of HMP metal reacts only on the particle surface while the bulk remains unreacted, ductile metal (reference FIG. 4). The portion of the HMP metals of a divergent particle size distribution may be the same or different HMP metals from the remainder HMP particles. In some embodiments, the proportion of large particle size distribution HMP metal M are typically about the same size as the LMP Y or alloy X/Y particles.

### Low Melting Point Metal

Ideally, to substitute in existing lead-free solder reflow processing in use by the electronics industry, the LMP metal (**Y**) or alloy (**X/Y**) used in the TLPS compositions of the invention is one that is commonly used in the fabrication of lead-free solder pastes. Exemplary solder paste alloys (**Y/X**) include, but are not limited to, Sn/Ag/Cu, Sn/Cu, Sn/Ag, Sn/Sb, Sn/In, Sn/Bi, Sn/Bi/Ag. While it is advantageous to use commercially available alloys, the invention can be practiced with any suitable alloy. The exact proportions of the constituents may vary and custom alloys are contemplated by the invention. In the representation **"Y/X"** for the solder alloy, "**X"** represents at least one metal that forms an alloy with **Y.** In some embodiments of the invention, **X** represents one, two, three or more alloying metals. For example, **Y/X** is used herein to represent various alloys of **Y** in where **Y** is tin, and **X** is a single metal, for example, copper (Sn/Cu), silver (Sn/Ag), antimony (Sn/Sb), indium (Sn/In), and bismuth (Sn/Bi). **Y/X** is also used to represent various alloys of **Y** is tin and **X** represents two metals, such as silver and copper (Sn/Ag/Cu; *e.g.*, SAC), and silver and bismuth (Sn/Bi/Ag).

Exemplary LMP metals (**Y**) include the following metals: Sn, Zn, Ga, In, alone or in an alloy form. Typically, **Y** in the compositions of the present invention is Sn or In and most frequently the **Y** is Sn in an alloy form **X/Y.** In certain embodiments of the invention, the reactive metal **Y** is Sn, which is present in the form of a low melting temperature alloy **X/Y,** and the reactive HMP metal **M** is Cu or Ag. In one embodiment of the invention, **X/Y** is SAC (Sn/Ag/Cu) and **M** is Cu.

In certain embodiments of the invention, partial re-melting of the invention composition after reflow is not detrimental, for instance when there is little mechanical load on the TLPS joint in a secondary reflow operation. In such applications, an excess of the element **Y** or alloy **X/Y** may be incorporated to provide a ductile phase that remains interspersed throughout the deposit after the reaction between Y and M during thermal processing at temperature T1.

### Particle Size, shape and form

High-melting-point metal **M,** the metal **Y** or alloy **X/Y** are introduced into the composition as particles (*e.g*. powders). The particles may be spherical, irregular, flakes, spongiform, rods and other forms known to those of skill in the art. The particles of HMP metal **M,** may be substantially elemental, may be alloyed with other elements, may be deposited onto a non-metallic or other core particle as a coating, or may itself be coated with another element, inorganic coating or organic coating. Likewise, LMP metal **Y** or alloy comprising **X/Y** may be a binary alloy consisting exclusively of a metallic element **X** and reactive, LMP metallic element **Y,** or may be alloyed with other constituents, may be deposited onto a non-metallic or other core particle as a coating, or may itself be coated with another element, inorganic coating or organic coating.

### Particle Coatings

Coatings may be present on either or both of the first and second particles, comprising **M** and **Y,** respectively. Coatings contemplated for use include metals, inorganic coatings, organic coatings and organo-metallic coatings. Preparing the particles with a coating can be used, for example, to introduce an additional metallic element into the TLPS compositions of the invention in order to alter the properties of the processed metallic matrix, protect the particles from oxidation, prevent the metals or metal oxides from premature reaction with the organic constituents, facilitate dispersion of the particles in the matrix, maintain the particles in suspension, impart lubricity to the composition, prevent agglomeration of the particles, and the like. The particular selection of the presence and type of coating is dependent on the application contemplated for the TLPS composition, the method of deposition and the chemistry of the organic vehicle - all of which are within the knowledge of the skilled artisan. Metals (Sn, Ag, Ni, Au, B, Co), phosphorous containing moieties such as self-assembling phosphonate monolayers, saturated and unsaturated fatty acids, inorganic and organic metal salts, metal alkoxides, triazoles, and polyaniline are all specifically contemplated as components of useful coatings according to the present invention.

### Organic Vehicle

The organic vehicle for the TLPS composition may simply be a carrier for the metallic particles, serving to hold the mixture together for ease of application and to keep the various particles in close proximity to each other. More typically, the organic vehicle provides a flux activity, particularly when a HMP metal of the composition is a non-noble metal, and may provide a mechanism for self-inerting the flux during applications in which there is no opportunity for the flux to be driven off during processing. The organic vehicle may further include thermoplastic polymer materials that allow the TLPS composition to be shaped as desired prior to processing, and may contain polymer precursors and/or other compounds and solvents that react to form an interpenetrating matrix with the metallic network during processing.

The organic vehicle of the invention composition typically serves to make the metallic reagents available for reaction and to protect them from the environment, much as a solvent does in an organic reaction. Several factors determine the selection of an appropriate solvent for an organic reaction (*e.g*. polarity, protic or aprotic, miscibility with water, etc.). Likewise, the organic vehicle in the compositions of the present invention is selected for appropriate attributes. Often, a critical attribute of the organic vehicle is removes the metallic oxides from the surfaces of the metallic reagents to make the reagents available for reaction. Removal of the metallic oxides is referred to as "fluxing" and may be accomplished by a variety of chemical species known to those of skill in the art, including organic acids and strong bases. Other attributes of the organic vehicle are selected on an application-specific basis. For instance, in an application in which invention metallic compositions are employed as a solder paste replacement, the entire organic vehicle may be formulated to volatilize during processing. In applications in which invention metallic compositions are employed in adherent coatings on nonmetallic surfaces, the organic vehicle may be selected for adhesive properties. Therefore, aside from the necessity for a fluxing component, the organic vehicle may include a wide variety of organic constituents that are well known in the art.

The constituents of the organic vehicle may be selected by those having ordinary skill in the art in accordance with the requirements of the application to meet specific deposition, processing, adhesion or other performance characteristics. In some embodiments, the organic vehicle may be comprised of a combination of a flux and a resin. Those skilled in the art can select both the flux and the resin from the products commonly used for these purposes. As a non-limiting example, an epoxy material may be used as a resin.

The organic vehicle will generally comprise about 1 to 15 weight percent (wt%), often about 5-15 wt%, and most frequently, about 5-10 wt% of the TLPS composition. This percentage is typically inclusive of any diluent used to achieve a consistency suitable for application techniques such as dispensing, screen printing, stencil printing and the like.

### Applications of Inventive TLPS Compositions

The metallurgical networks formed from the TLPS compositions of the invention are useful for electrically, thermally and/or mechanically connecting elements within electrical structures. Exemplary applications in which inventive compositions may be used include connecting semiconductor dies to packaging elements; connecting packaged semiconductor components to printed circuit boards; connecting other discrete components to electronic substrates; attaching discrete components to leads; forming connections between stacked die; forming circuit traces; filling holes in electronic substrates; interconnecting circuit layers in printed circuit boards and/or semiconductor packages; forming collection grids for solar panels; forming electrically conductive pillars, cylinders or columns; to electrically interconnecting electrical subsystems through interposer structures, and the like.

The TLPS compositions of the invention can be applied using various techniques, including, but not limited to, needle dispensing, stenciling, screen printing, ink jetting, extrusion, casting, spraying and other methods that will be known to those of skill in the art, such as methods that form patterned deposits to which electronic components may then be attached.

After deposition, metallic components (*e.g*., electronic components) are contacted with the deposited invention composition to form an assembly. Any solvents present in the composition are evolved at mildly elevated temperature, typically in the range of 60-150°C, and then the assembly is thermally processed by raising it to a temperature in excess of the melting temperature of the solder alloy powder (*e.g*., alloy **X/Y**) and/or LMP metal **Y** powder.

The compositions of the invention can be thermally processed in an oven, in a reflow furnace, in thermocompression equipment, on a hot plate, in a lamination press, or by any other available means, such as means typically employed for the processing of solder or filled organic adhesives. The skilled artisan will be aware of additional methods that are typically employed for the processing of solder or filled organic adhesives that will be suitable for processing the TLPS compositions described herein. The specific thermal process conditions are dependent upon the application, intended use, the TLPS composition and any organic binder constituents.

### Methods of Forming Connections Using Invention Compositions

Also provided by the invention are methods of forming a mechanical connection, a conductive connection, an electrical connection, a conductive circuit and the like, in an electrical assembly by applying a TLPS composition disclosed herein to at least one element of an electronic assembly, and heating the element to a process temperature, **T1,** such that the high melting point metal **M** forms intermetallic species with the reactive, low melting point metal **Y,** thereby forming a connection or circuit in the electrical assembly. The elements that can be connected include, but are not limited to semiconductor dies, packaging elements, passive electronic components, leads, lead frames, packaged semiconductor components, printed circuit boards, electronic substrates, stacked die, circuit traces, circuit layers, collection grids, solar panels, electrically conductive pillars, electrically conductive cylinders, electrically conductive columns, and electrical subsystems. Application of the TLPS composition can be by any suitable method known in the art, such as needle dispensing, stenciling, screen printing, ink jetting, extrusion, casting, and spraying.

### EXAMPLES

Reference will now be made to more specific embodiments of the present disclosure and experimental results that provide support for such embodiments. However, Applicants note that the disclosure below is for illustrative purposes only and is not intended to limit the scope of the claimed subject matter in any way.

### Examples 1-4

TLPS paste compositions corresponding to the cross-sectional images of processed deposits in FIG. 5 were prepared by measuring the proportions of particles provided in Table 1 into jars containing a measured proportion of pre-mixed flux vehicle. The powders were blended with the flux vehicle to create homogenized paste compositions. The paste compositions were stencil printed onto a metallized substrate in a regular pattern of rectangular deposits. In some of these deposits, 0805 sized ceramic capacitors were placed such that both end terminations of the capacitors were seated in adjacent rectangular deposits. The partially assembled samples were thermally processed in a typical SAC solder reflow process. The processed samples were then divided for various tests including shear force required to dislodge the assembled components at both room and elevated temperature; as well as thermal cycling, high temperature storage at 150°C and cross-sectional analysis. Some of the results of these analyses, as well as some computational analyses of the compositions are also provided in Table 1. Surface area (SA) of Cu/Sn was determined using actual particle distributions by laser diffraction analysis. Shear strength was measured by bonding 0805 sized ceramic capacitors to copper. Electrical resistivity was measured by preparing a coating of the paste on a glass slide, processing through a lead-free solder reflow cycle and then measurement of the resistivity of the processed coating using an ohmmeter equipped with 4-point probe. Remelt behavior was measured using DSC by subjecting a sample to a thermal profile that mimics a solder reflow, cooling to room temperature and then heating to 300°C.

Examination of the shear strength values in Table 1 indicates a decrease in strength as a function of the proportion of Sn alloy is increased, particularly at high temperature. In this experiment, the copper particle size distributions and their relative proportion was kept constant and only the weight ratio between Cu and Sn was varied; however, analysis of the surface area (SA) of Cu/Sn weight ratio indicates that the shear strength declines rapidly as this ratio drops below 0.07, again, particularly at high temperature.

| **Table 1** | Ex. 1 | Ex. 2 | Ex. 3 | Ex. 4 | Comp. Ex. A | Comp. Ex. B |
|---|---|---|---|---|---|---|
| Cu (**µm) | 50.21% | 46.03% | 41.84% | 33.47% | 25.10% | 16.74% |
| Cu (**µm) | 5.58% | 5.11% | 4.65% | 3.72% | 2.79% | 1.86% |
| SAC 305, Type 4 | 37.19% | 41.84% | 46.49% | 55.79% | 65.09% | 74.38% |
| Flux vehicle | 7.02% | 7.02% | 7.02% | 7.02% | 7.02% | 7.02% |
| Cu/Sn (wt) | 1.5 | 1.2 | 1.0 | 0.7 | 0.4 | 0.3 |
| SA Cu/Sn wt. | 0.17 | 0.14 | 0.12 | 0.08 | 0.05 | 0.03 |
| Shear strength (RT, kg/mm²) | 5.180 | 5.040 | 4.970 | 3.950 | 3.680 | 2.960 |
| Shear strength (260°C, kg/mm²) | 4 | 3 | 1.5 | 0.5 | 0.1 | 0 |

### Examples 5-8

Compositions were prepared in a similar fashion to those in Example 1; however, in this experiment, the surface area of copper to Sn weight ratio was kept nearly constant by varying the particle size distributions of the copper particles as the alloy weight proportion was varied. In this experiment quantitative analysis of the residual, remelting alloy of the compositions after solder-reflow-like processing was used as a predictive measure of the loss of strength at high temperature. A higher remelt value corresponds to a greater loss of strength at high temperature. In previous testing of TLPS compositions, a remelt of approximately 7 J/g has been found to correlate to an approximately 50% reduction in strength at 260°C from room temperature values. Because the metals do continue to interdiffuse with additional thermal work, the exact values for remelt and shear behavior will vary according to the process cycle.

| **Table 2** | Ex. 5 | Ex. 6 | Ex. 7 | Ex. 8 | Comp. Ex. C |
|---|---|---|---|---|---|
| Cu (2 µm) | 20.46% | 12.09% | 2.79% | 0.00% | 20.46% |
| Cu (8 µm) | 26.03% | 39.05% | 53.00% | 37.19% | 0.00% |
| Cu (20 µm) | 0.00% | 0.00% | 0.00% | 23.25% | 26.03% |
| SAC 305, Type 4 | 46.49% | 41.84% | 37.19% | 32.54% | 46.49% |
| Flux vehicle | 7.02% | 7.02% | 7.02% | 7.02% | 7.02% |
| Cu/Sn (wt) | 1.00 | 1.22 | 1.50 | 1.86 | 1.00 |
| SA Cu/Sn wt. | 0.09 | 0.10 | 0.10 | 0.10 | 0.07 |
| Electrical Resistivity (micro-ohm*cm) | 21 | 22 | 31 | 45 | 23 |
| Remelt on DSC (J/g) | 6.26 | 4.93 | 1.77 | 0 | 9.75 |

This example demonstrates that the weight percentage of Sn-alloy may be widely varied and still maintain acceptable high temperature strength if the ratio of surface area of copper per weight of tin is maintained within the invention range. Comparison composition Comp. Ex. C demonstrates that SA Cu/Sn (wt. %) ratios outside the invention range, even for the same weight proportions of copper and tin, result in levels of remelt that will result in significant loss of strength at high temperature.

### Examples 9-12

Compositions were prepared in a similar fashion to those in Example 1; however, in this experiment, the surface area of copper to Sn weight ratio was varied and the material was processed using a short SAC solder reflow cycle in which the temperature was raised gradually (15°C/min) to 150°C, rapidly (38°C /min) to 255°C and then held at 255°C for 90 seconds in a nitrogen atmosphere.

| **Table 3** | Ex. 9 | Ex. 10 | Ex. 11 | Ex. 12 | Comp. Ex. D | Comp. Ex. E | Comp. Ex. F |
|---|---|---|---|---|---|---|---|
| Cu (3 µm) | 40 | 45 | 50 | 55 | 35 | 60 | 65 |
| SAC 305, Type 4 | 60 | 55 | 50 | 45 | 65 | 40 | 35 |
| Flux vehicle 3 | 8.2 | 8.2 | 8.2 | 8.2 | 8.2 | 8.2 | 8.2 |
| SA Cu/Sn wt. | 0.083 | 0.102 | 0.124 | 0.152 | 0.067 | 0.187 | 0.231 |
| Electrical Resistivity (micro-ohm*cm) | 24 | 22 | 25 | 25 | 19 | 26 | 30 |
| Shear strength (RT, kg/mm²) | 8.02 | 6.22 | 5.48 | 6.31 | 7.24 | 9.4 | 7.22 |
| Shear strength (260°C, kg/mm²) | 0.34 | 0.3 | 0.57 | 0.3 | 0.17 | 0.41 | 0.48 |
| Remelt on DSC (J/g) | 25.56 | 18.43 | 4.98 | 3.66 | 35.82 | 2.48 | 1.1 |

Examples 9-12 demonstrate that the compositions of the present invention provide an advantageous combination of low electrical resistivity, good shear strength at both room and elevated temperatures, and low remelting behavior. In contrast, Comparative Ex. D, with a low SA Cu/Sn ratio, shows a low shear strength at 260°C and high remelting behavior. In addition, Comparative Examples E and F, which have high SA Cu/Sn, show poor resistivities.

### Examples 13-17

Compositions were prepared in a similar fashion to those in Example 1; however, in this experiment, Cu (20 µm) was added to vary the SA Cu/Sn ratio.

| **Table 4** | Ex. 13 | Ex. 14 | Ex. 15 | Ex. 16 | Ex. 17 | Ex. 18 | Comp. Ex. H | Comp. Ex. 1 | Comp. Ex. J | Comp. Ex. K |
|---|---|---|---|---|---|---|---|---|---|---|
| Cu (3 µm) | 45 | 40 | 35 | 30 | 25 | 20 | 15 | 10 | 5 | 0 |
| Cu (20 µm) | 5 | 10 | 15 | 20 | 25 | 30 | 35 | 40 | 45 | 50 |
| SAC 305, Type 4 | 50 | 50 | 50 | 50 | 50 | 50 | 50 | 50 | 50 | 50 |
| Flux vehicle 4 | 8.2 | 8.2 | 8.2 | 8.2 | 8.2 | 8.2 | 8.2 | 8.2 | 8.2 | 8.2 |
| SA Cu/Sn wt. | 0.115 | 0.106 | 0.097 | 0.087 | 0.078 | 0.069 | 0.060 | 0.051 | 0.041 | 0.032 |
| Electrical Resistivity (micro-ohm*cm) | 20 | 18 | 24 | 20 | 21 | 20 | 25 | 26 | 35 | 32 |
| Shear strength (RT, kg/mm²) | 8.4 | 7.58 | 8.65 | 8.91 | 8.04 | 8.63 | 6.72 | 2.74 | 0.91 | 1.23 |
| Shear strength (260°C, kg/mm²) | 0.62 | 0.25 | 0.35 | 0.22 | 0.3 | 0.25 | 0.25 | 0.14 | 0.05 | 0.01 |
| Remelt on DSC (J/g) | 10.34 | 11.82 | 13.31 | 16.7 | 25.67 | 25.1 | 28.25 | 33.53 | 38.21 | 41.5 |

Examples 13-17 demonstrate that the compositions of the present invention show low remelting behavior as compared to Comparative Examples G-K, which have SA Cu/Sn ratios below 0.07.

## Claims

1. A paste composition comprising:
a. 40-70 percent by weight (wt%) of a low melting point (LMP) particle composition, wherein the particles are selected from the group consisting of particles of at least one LMP metal (**Y**), at least one alloy of the at least one LMP metal (**X/Y**), and combinations thereof;
b. 25-65 wt% of a high melting point (HMP) particle composition, comprising at least one, preferably at least two, metallic element (**M**) that is reactive with the at least one LMP metal **Y** of the LMP particle composition at a process temperature T1; and
c. 1-15 wt% of a fluxing vehicle,
wherein the reaction products formed between **M** and **Y** are crystalline intermetallics that are solids at temperature T1; and
wherein the surface area of said HMP particle composition is in the range of 0.07 to 0.18 square meters per gram of Y in said composition, preferably in the range of 0.08 to 0.15 square meters per gram of Y in said composition, measured with the method as of the description.

2. The paste composition of claim 1, wherein Y is selected from the group consisting of Sn, Zn, Ga, In, and combinations thereof, preferably Sn, In, and combinations thereof.

3. The paste composition of any one of claims 1 and 2, wherein X/Y is selected from the group consisting of Sn/Ag/Cu, Sn/Cu, Sn/Ag, Sn/Sb, Sn/In, Sn/Bi, and Sn/Bi/Ag.

4. The paste composition of any one of claims 1-3, wherein M is selected from the group consisting of Cu, Ag, Pd, Au, Al, Ni, Be, Rh, Co, Fe, Mo, W, Mn, Pt and combinations thereof, preferably Cu, Ag, Pd, Au, Al, Ni, Pt and combinations thereof, more preferably Cu.

5. The paste composition of any one of claims 1-4, wherein the HMP metal M comprises particles having shapes selected from the group consisting of spherical, near spherical, platelet, flake, amorphous and combinations thereof.

6. The paste composition of any one of claims 1-5 having an endotherm in differential scanning calorimetry (DSC) of at least 1.7 J/g.

7. The paste composition of any one of claims 1-6 having an endotherm in differential scanning calorimetry (DSC) of not more than 30 J/g.

8. The paste composition of any one of claims 1-7 having an electrical resistivity of at least 17 micro-ohm*cm, measured with the method as of the description.

9. The paste composition of any one of claims 1-8 having an electrical resistivity of not more than 25 micro-ohm*cm.

10. The paste composition of any one of claims 1-9 having a shear strength at elevated temperature of at least 0.2 kg/mm², measured with the method as of the description.

11. The paste composition of any one of claims 1-10 having a shear strength at elevated temperature of not more than 10 kg/mm².

12. The paste composition of any one of claims 1-11 having a shear strength at room temperature of at least 3 kg/mm².

13. The paste composition of any one of claims 1-12 having a shear strength at room temperature of not more than 10 kg/mm².

14. The use of the paste composition of any one of claims 1 to 13 for electrically, thermally and/or mechanically connecting elements within electrical structures.

15. A method for contacting two or more electronic components, comprising the steps of:
a) dispensing a paste composition according to any one of claims 1-13 between the electronic components; and
b) thermally processing the electronic components at a temperature in excess of the melting temperature of the solder alloy powder (**X/Y**) and/or LMP metal **Y.**

## Patentansprüche

1. Pastenzusammensetzung, umfassend:
a. 40-70 Gew.-% einer niedrigschmelzpunkt- (LMP) Teilchenzusammensetzung, wobei die Teilchen aus der Gruppe ausgewählt sind, die aus Teilchen aus mindestens einem LMP-Metall (Y), mindestens einer Legierung des mindestens einen LMP-Metalls (X/Y) und Kombinationen davon besteht;
b. 25-65 Gew.-% einer hochschmelzpunkt- (HMP) Teilchenzusammensetzung, die mindestens ein, vorzugsweise mindestens zwei, metallische Elemente (M) umfasst, die mit dem mindestens einen LMP-Metall Y der LMP-Teilchenzusammensetzung bei einer Prozesstemperatur T1 reaktiv sind; und
c. 1-15 Gew.-% eines Flußmittels,
wobei die zwischen M und Y gebildeten Reaktionsprodukte kristalline intermetallische Verbindungen sind, die bei der Temperatur T1 Feststoffe sind; und
wobei die Oberfläche der HMP-Teilchenzusammensetzung im Bereich von 0,07 bis 0,18 Quadratmeter pro Gramm Y in der Zusammensetzung, vorzugsweise im Bereich von 0,08 bis 0,15 Quadratmeter pro Gramm Y in der Zusammensetzung liegt, gemessen mit dem Verfahren gemäß der Beschreibung.

2. Pastenzusammensetzung gemäß Anspruch 1, wobei Y ausgewählt ist aus der Gruppe bestehend aus Sn, Zn, Ga, In und Kombinationen davon, bevorzugt Sn, In und Kombinationen davon.

3. Pastenzusammensetzung gemäß einem beliebigen der Ansprüche 1 und 2, wobei X/Y ausgewählt ist aus der Gruppe bestehend aus Sn/Ag/Cu, Sn/Cu, Sn/Ag, Sn/Sb, Sn/In, Sn/Bi und Sn/Bi/Ag.

4. Pastenzusammensetzung gemäß einem beliebigen der Ansprüche 1-3, wobei M ausgewählt ist aus der Gruppe bestehend aus Cu, Ag, Pd, Au, Al, Ni, Be, Rh, Co, Fe, Mo, W, Mn, Pt und Kombinationen davon, bevorzugt Cu, Ag, Pd, Au, Al, Ni, Pt und Kombinationen davon, mehr bevorzugt Cu.

5. Pastenzusammensetzung gemäß einem beliebigen der Ansprüche 1-4, wobei das HMP-Metall M Teilchen umfasst, die Formen ausgewählt aus sphärisch, beinahe-sphärisch, Plättchen, Flocken, amorph und Kombinationen davon aufweisen.

6. Pastenzusammensetzung gemäß einem beliebigen der Ansprüche 1-3, aufweisend einen Endotherm in dynamischer Differenzkalorimetrie (DSC) von mindestens 1,7 J/g.

7. Pastenzusammensetzung gemäß einem beliebigen der Ansprüche 1-6, aufweisend einen Endotherm in dynamischer Differenzkalorimetrie (DSC) von nicht mehr als 30 J/g.

8. Pastenzusammensetzung gemäß einem beliebigen der Ansprüche 1-7, aufweisend eine elektrische Resistivität von mindestens 17 Mikroohm*cm, gemessen mit dem Verfahren gemäß der Beschreibung.

9. Pastenzusammensetzung gemäß einem beliebigen der Ansprüche 1-8, aufweisend eine elektrische Resistivität von nicht mehr als 25 Mikroohm*cm.

10. Pastenzusammensetzung gemäß einem beliebigen der Ansprüche 1-9, aufweisend eine Scherfestigkeit bei erhöhter Temperatur von mindestens 0,2 kg/mm², gemessen mit dem Verfahren gemäß der Beschreibung.

11. Pastenzusammensetzung gemäß einem beliebigen der Ansprüche 1-10, aufweisend eine Scherfestigkeit bei erhöhter Temperatur von nicht mehr als 10 kg/mm².

12. Pastenzusammensetzung gemäß einem beliebigen der Ansprüche 1-11, aufweisend eine Scherfestigkeit bei Raumtemperatur von mindestens 3 kg/mm².

13. Pastenzusammensetzung gemäß einem beliebigen der Ansprüche 1-12, aufweisend eine Scherfestigkeit bei Raumtemperatur von nicht mehr als 10 kg/mm².

14. Verwendung der Pastenzusammensetzung gemäß einem beliebigen der Ansprüche 1 bis 13 zum elektrischen, thermischen und/oder mechanischen Verbinden von Elementen in elektrischen Strukturen.

15. Verfahren zum in Kontakt Bringen von zwei oder mehr elektronischen Komponenten, umfassend die Schritte:
a) Verteilen einer Pastenzusammensetzung gemäß einem beliebigen der Ansprüche 1-13 zwischen den elektronischen Komponenten; und
b) thermisch Verarbeiten der elektronischen Komponenten bei einer Temperatur oberhalb der Schmelztemperatur des Schweißlegierungspulvers (X/Y) und/oder des LMP-Metalls Y.

## Revendications

1. Composition de pâte comprenant :
a. 40 à 70 pour cent en poids (% en poids) d'une composition de particules à bas point de fusion (LMP), les particules étant choisies dans le groupe constitué par des particules d'au moins un métal LMP (Y), d'au moins un alliage de l'au moins un métal LMP (X/Y), et des combinaisons correspondantes ;
b. 25 à 65 % en poids d'une composition de particules à point de fusion élevé (HMP) comprenant au moins un, préférablement au moins deux, élément(s) métallique(s) (M) qui est réactif avec l'au moins un métal LMP Y de la composition de particules LMP à une température de traitement T1 ; et
c. 1 à 15 % en poids d'un véhicule de fluxage,
les produits de réaction formés entre M et Y étant des composés intermétalliques cristallins qui sont solides à la température T1 ; et
la superficie de ladite composition de particules HMP étant dans la plage de 0,07 à 0,18 mètres carrés par gramme de Y dans ladite composition, préférablement dans la plage de 0,08 à 0,15 mètres carrés par gramme de Y dans ladite composition, mesurée par le procédé de la description.

2. Composition de pâte selon la revendication 1, Y étant choisi dans le groupe constitué par Sn, Zn, Ga, In, et des combinaisons correspondantes, préférablement Sn, In, et des combinaisons correspondantes.

3. Composition de pâte selon l'une quelconque des revendications 1 et 2, X/Y étant choisi dans le groupe constitué par Sn/Ag/Cu, Sn/Cu, Sn/Ag, Sn/Sb, Sn/In, Sn/Bi, et Sn/Bi/Ag.

4. Composition de pâte selon l'une quelconque des revendications 1 à 3, M étant choisi dans le groupe constitué par Cu, Ag, Pd, Au, Al, Ni, Be, Rh, Co, Fe, Mo, W, Mn, Pt et des combinaisons correspondantes, préférablement Cu, Ag, Pd, Au, Al, Ni, Pt et des combinaisons correspondantes, plus préférablement Cu.

5. Composition de pâte selon l'une quelconque des revendications 1 à 4, le métal HMP M comprenant des particules ayant des formes choisies dans le groupe constitué par sphérique, presque sphérique, de plaquette, de flocon, amorphe et des combinaisons correspondantes.

6. Composition de pâte selon l'une quelconque des revendications 1 à 5 ayant un endotherme en calorimétrie différentielle à balayage (DSC) d'au moins 1,7 J/g.

7. Composition de pâte selon l'une quelconque des revendications 1 à 6 ayant un endotherme en calorimétrie différentielle à balayage (DSC) de pas plus de 30 J/g.

8. Composition de pâte selon l'une quelconque des revendications 1 à 7 ayant une résistivité électrique d'au moins 17 micro-ohm*cm, mesurée par le procédé de la description.

9. Composition de pâte selon l'une quelconque des revendications 1 à 8 ayant une résistivité électrique de pas plus de 25 micro-ohm*cm.

10. Composition de pâte selon l'une quelconque des revendications 1 à 9 ayant une résistance au cisaillement à température élevée d'au moins 0,2 kg/mm², mesurée par le procédé de la description.

11. Composition de pâte selon l'une quelconque des revendications 1 à 10 ayant une résistance au cisaillement à température élevée de pas plus de 10 kg/mm².

12. Composition de pâte selon l'une quelconque des revendications 1 à 11 ayant une résistance au cisaillement à température ambiante d'au moins 3 kg/mm².

13. Composition de pâte selon l'une quelconque des revendications 1 à 12 ayant une résistance au cisaillement à température ambiante de pas plus de 10 kg/mm².

14. Utilisation de la composition de pâte selon l'une quelconque des revendications 1 à 13 pour connecter des éléments de manière électrique, de manière thermique et/ou de manière mécanique à l'intérieur de structures électriques.

15. Procédé pour la mise en contact de deux composants électroniques ou plus, comprenant les étapes de :
a) distribution d'une composition de pâte selon l'une quelconque des revendications 1 à 13 entre les composants électroniques ; et
b) traitement de manière thermique des composants électroniques à une température dépassant la température de fusion de la poudre d'alliage de brasage (X/Y) et/ou du métal LMP Y.
